# NOUVEAU FASCICULE DE BREVET EUROPEEN

(11) **EP 0 310 501 B2**
(45) Date de publication et mention de la décision concernant l'opposition: **08.10.2003**
(45) Mention de la délivrance du brevet: 01.04.1992
(21) Numéro de dépôt: 88402448.0
(22) Date de dépôt: 28.09.1988
(51) Int. Cl.: A01G 31/00

(54) **Substrat pour culture hors-sol à teneur en eau controlée dans son épaisseur**
Substrat für erdlose Kultur mit entlang seiner Dicke kontrolliertem Wassergehalt
Substrate for soilless culture with water retention controlled through its thickness

(30) Priorité: 02.10.1987 FR 8713625
(43) Date de publication de la demande: 05.04.1989
(73) Titulaire: SAINT-GOBAIN ISOVER, 92400 Courbevoie (FR)
(72) Inventeur: Kafka, Bernard, F-60290 Rantigny (FR); Baufume, Michel, F-60810 Barbery (FR)
(74) Mandataire: Luziau, Nelly

(56) Documents cités:
- EP-A- 0 209 958
- EP-A- 0 280 338

## Description

La présente invention concerne des substrats pour culture hors-sol, en particulier des substrats présentant une teneur en eau contrôlée dans leur épaisseur.

Il est important, pour la croissance des plantes, que le substrat contienne de l'air et puisse absorber et retenir de l'eau ou des solutions aqueuses nutritives.

On a proposé, pour la culture hors-sol, des substrats à base de fibres minérales, telles que de la laine de roche ou de verre, car ces substrats présentent l'avantage d'être très poreux, les fibres occupant généralement au plus 5 % du volume total des substrats. Ils peuvent servir de support des racines, de réserve d'air et d'eau ou de solutions nutritives ; d'autre part, ils sont légers et inertes chimiquement.

Dans la présente description, on parlera, pour plus de commodité, d'alimentation en eau des substrats ; cependant, il est bien entendu que toutes solutions aqueuses nutritives appropriées pour les plantes sont utilisables.

La rétention d'eau, ou hydrorétension, d'un substrat est une caractéristique importante pour la conduite de la culture des plantes. Les conditions d'humidité peuvent varier suivant différents facteurs tels que le type de plantes à cultiver, le climat, les saisons, le stade de développement de la plante. Quelles que soient les conditions d'humidité désirées pour un type particulier de substrat, il est nécessaire que l'eau soit absorbée et retenue dans une certaine mesure par le substrat : il ne faut pas qu'elle s'écoule immédiatement, mais elle doit cependant rester disponible pour la plante. En effet, l'eau ou la solution trop fortement liée au substrat ou s'écoulant trop vite ne peut pas être utilisée par la plante dans de bonnes conditions.

Les substrats à base de fibres minérales, par suite de leurs caractéristiques, donnent des résultats satisfaisants lorsqu'on les utilise pour la culture hors-sol. Cependant, ils présentent encore un inconvénient : les substrats lors de leur utilisation, sont posés sur des supports imperméables et sont généralement alimentés en eau par percolation. L'eau s'écoule par gravité à travers le substrat. La partie inférieure du substrat reste en contact avec de l'eau par suite de la capillarité. La partie inférieure du substrat contient donc plus d'eau que la partie supérieure et moins d'air que cette dernière. Les caractéristiques de répartition eau/air ne sont donc pas identiques dans toute l'épaisseur du substrat ; les racines se développent d'une manière inégale dans l'ensemble du substrat, ce qui est nuisible pour la plante et réduit l'efficacité du substrat.

On a donc cherché, suivant l'invention, un nouveau substrat pour culture hors-sol qui n'ait pas l'inconvénient précité et qui particulièrement présente une teneur en eau contrôlée dans l'épaisseur du substrat.

Le document EP-A-0 280 338, qui ne peut être utilisé qu'au titre de l'Article 54(3) CBE pour tous les pays désignés sauf le Luxembourg (art. 54(4) CBE), décrit un produit poreux qui se caractérise par la présence d'un matériau ayant une capacité de rétention d'eau supérieure à celle des fibres minérales qui forment la matrice, ce matériau pouvant être placé en haut du produit.

Le substrat, selon l'invention, pour culture hors-sol, utile pour l'alimentation de plantes en eau ou en solutions nutritives, est formé d'un feutre de fibres minérales tel que défini dans les revendications soit selon le jeu pour le Luxembourg soit selon le jeu pour les autres pays désignés. Ce gradient d'hydrorétentivité compense l'effet de la gravité et permet d'obtenir, dans l'épaisseur du substrat, lors de son utilisation, la teneur en eau souhaitée.

L'hydrorétention d'un substrat correspond à son aptitude à absorber et retenir l'eau.

Pour déterminer la quantité d'eau que retient le substrat, appelée hydrorétention, on le soumet, après l'avoir imbibé d'eau, à des forces de succion et on détermine sa teneur en eau en fonction de ces forces. On définit ainsi, pour une dépression donnée, exprimée en centimètre d'eau, le volume d'eau qui est contenu dans le substrat et qui représente un certain pourcentage du volume du substrat

Deux valeurs servent, d'une manière conventionnelle, de référence pour déterminer la rétention d'eau ou l'hydrorétention du substrat : le pourcentage volumique de l'eau qui est retenue par le substrat sous une dépression de 10 cm d'eau et le pourcentage volumique de l'eau qui est retenue par le substrat sous une dépression de 20 cm d'eau. Le substrat présente une hydrorétention satisfaisante lorsque le volume d'eau, extrait entre ces deux valeurs et qui correspond à l'eau disponible, est grand.

On constate que le pourcentage volumique de l'eau retenue par les substrats, sous une dépression de 10 cm d'eau , est élevé et il est généralement faible sous une dépression de 20 cm d'eau. Pour différencier divers substrats, en ce qui concerne leur hydrorétention, on fait donc référence aux pourcentages volumiques obtenus pour une dépression de 10 cm d'eau.

Il existe divers procédés pour déterminer l'hydrorétention d'un substrat. Celui utilisé pour la présente invention est décrit ultérieurement.

Comme on l'a indiqué, dans un substrat formé de fibres minérales, moins de 5% de son volume est occupé par des fibres. 95 % du volume du substrat peut donc être occupé par l'eau et l'air. En général, un substrat présentant une hydrorétention satisfaisante contient au moins 50 % environ d'eau, pour une dépression de 10 cm d'eau, cette valeur pouvant être différente pour un type de culture particulier.

Dans les susbstrats usuels, la répartition d'eau n'est pas constante dans toute leur épaisseur par suite de la gravité, ce qui nuit à une bonne croissance des plantes. Le contrôle de l'hydrorétention dans toute l'épaisseur du substrat, conformément à l'invention, permet de pallier à cet inconvénient.

Au dessin annexé, donné seulement à titre d'exemple, lafig 1 donne des courbes d'hydrorétention de substrats usuels de même densité moyenne, mais contenant des fibres de diamètres moyens différents.

La fig 2 donne des courbes d'hydrorétention de substrats usuels contenant des fibres de même diamètre moyen, mais de densités moyennes différentes.

Les fig. 3, 4 et 5 donnent courbes d'hydrorétention de substrats I, III et V, conformes à l'invention et de substrats II, IV et VI de structure identique mais utilisé dans des conditions non conformes à l'invention.

La fig. 6 représente un dispositif permettant la détermination de l'hydrorétention.

L'hydrorétentivité est liée à la capillarité du feutre constituant le substrat. La capillarité dépend du diamètre des fibres, donc de leur finesse, et de la densité du feutre obtenu à partir de ces fibres.

On a noté que, pour une même densité, l'hydrorétentivité d'un feutre augmente avec la finesse des fibres.

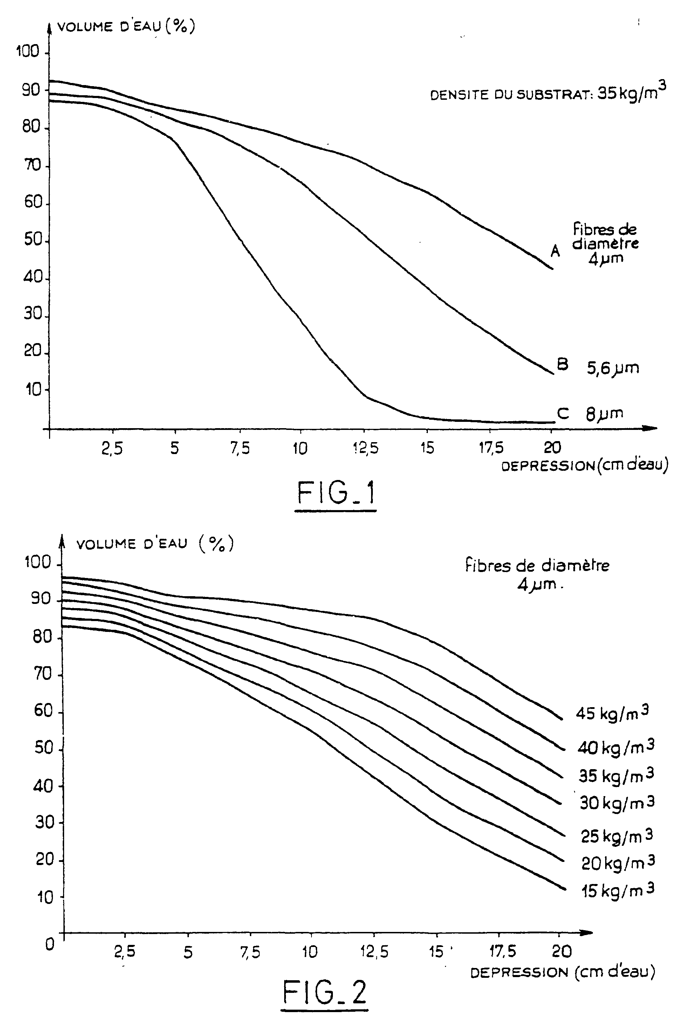

La fig 1 donne des courbes d'hydrorétention (pourcentage volumique d'eau en fonction de la dépression en centimètre d'eau) de trois substrats A, B et C usuels, non conformes à l'invention, constitués d'un feutre de 75 mm d'épaisseur et de 35 kg/m³ de densité moyenne. Ces substrats contiennent des fibres de verre de diamètre moyen différent : pour le substrat A, le diamètre moyen des fibres est de 4 µm, pour le substrat B, il est de 5,6 µm et pour le substrat C, il est de 8 µm. On peut constater que le substrat qui présente l'hydrorétention la plus élevée est celui qui est formé des fibres les plus fines, c'est-à-dire le substrat A.

Avec des feutres qui contiennent des fibres de même diamètre moyen, l'hydrorétentivité diminue lorsque la densité moyenne diminue.

La fig 2 donne les courbes d'hydrorétention pour des substrats contenant des fibres de même diamètre moyen, 4 µm, mais dont la densité moyenne est différente. On constate que l'hydrorétention la plus forte est obtenue avec le substrat de densité moyenne la plus élevée.

Pour obtenir des substrats présentant une teneur en eau déterminée dans toute leur épaisseur, avec un minimum d'accumulation d'eau dans leur partie inférieure par suite de la gravité, l'invention propose un substrat qui est formé d'une structure fibreuse hétérogène dont l'hydrorétentivité décroit suivant le sens de la gravité, par suite de l'existence d'un gradient de densité suivant l'épaisseur du substrat

En particulier, un substrat selon l'invention peut être formé d'un feutre de fibres minérales de même diamètre moyen, mais dont la densité diminue, suivant l'épaisseur du substrat, dans le sens de la gravité.

Un autre substrat, selon l'invention, comprend une structure fibreuse hétérogène ayant un gradient d'hydro-rétentivité obtenu par un gradient de finesse des fibres suivant l'épaisseur du substrat.

Un tel substrat, conformément à l'invention, est, par exemple, formé d'un feutre de fibres minérales de densité moyenne déterminée et dont le diamètre moyen des fibres croit dans le sens de la gravité.

La densité des feutres utilisés pour les substrats selon l'invention peut varier d'une manière importante. Elle est généralement de 15 à 60 kg/m³ et de préférence de 20 à 30 kg/m³.

Le diamètre moyen des fibres peut avoir toute valeur appropriée. Il est généralement compris entre 2 µm et 12 µm et de préférence entre 4 µm et 8 µm. Des fibres de diamètre inférieur à 2 µm sont peu souhaitables car on obtiendrait des feutres ayant une forte hydrorétentivité ; la teneur en air serait faible et provoquerait l'asphyxie des racines ; en outre, des feutres préparés à partir de fibres aussi fines présenteraient une faible résistance aux efforts mécaniques. Des fibres de diamètre supérieure à 12 µm formeraient des feutres ayant une faible hydrorétention.

Le gradient d'hydrorétentivité, tel que défini précédemment, peut aussi être obtenu par des gradients de densité et de finesse suivant l'épaisseur du substrat.

Quel que soit le sens de variation de la densité et/ou de la finesse, les feutres constituant les substrats selon l'invention doivent présenter une hydrorétentivité qui décroit suivant le sens de la gravité ; ainsi les fibres se trouvant prés de la surface supérieure ont des caractéristiques qui leur permettent de retenir plus d'eau que celles situées à la base du substrat.

L'accumulation d'eau à la partie inférieure des substrats qui est due à la gravité se trouve ainsi réduite.

Une culture peut nécessiter l'utilisation d'un substrat particulier, présentant une hydrorétention spécifique, qui dépend notamment, comme on l'a déjà dit, de la plante elle-même, du climat, des saisons. On peut obtenir, grâce à l'invention, un substrat approprié à chaque culture en faisant varier, d'une manière convenable, les caractéristiques de densité et de diamètre des fibres du feutre utilisé pour fabriquer le substrat.

L'invention permet donc, en créant un gradient d'hydrorétentivité dans un feutre constituant un substrat, de contrôler la teneur en eau du substrat, teneur qui peut être constante ou qui peut varier dans toute l'épaisseur du substrat, suivant l'utilisation prévue. On obtient particulièrement de bons résultats lorsque l'hydrorétentivité est très élevée dans la partie supérieure du substrat. C'est le cas, notamment, lorsque la partie supérieure du substrat contient des fibres de très faible diamètre moyen, par exemple compris entre 2 µm et 5 µm, ou présente une densité élevée par exemple comprise entre 30 et 60 kg/m³.

Les substrats selon l'invention peuvent présenter des gradients de densité et/ou de finesse en faisant varier progressivement la densité et/ou le diamètre des fibres dans toute l'épaisseur du substrat. Les substrats peuvent aussi être formés de plusieurs couches distinctes qui présentent chacune des caractéristiques de densité et de finesse de fibres appropriées pour obtenir le résultat souhaité, c'est-à-dire un hydrorétentivité qui décroit dans le sens de la gravité.

Pour déterminer les couches de fibres devant former le substrat, on fait référence à leur grammage (g/m²) qui est reliée à la densité et à l'épaisseur. Les couches peuvent présenter chacune un grammage différent ou identique, par exemple de 300 g à 2500 g/m². Le nombre de couches formant le substrat peut être variable suivant le substrat souhaité. On peut utiliser des substrats ayant de 2 à 8 couches de fibres et de préférence ayant au moins 3 couches. Un nombre de couches élevé permet d'affiner le gradient d'hydrorétentivité dans toute l'épaisseur du substrat.

L'épaisseur totale du substrat peut varier en fonction de l'utilisation ultérieure. Elle est le plus souvent de l'ordre de 70 mm à 75 mm. Les substrats peuvent avoir des épaisseurs inférieures ou supérieures ; cependant, les épaisseurs doivent être suffisantes pour permettre un développement satisfaisant des racines et une bonne alimentation des plantes en eau ou en solutions nutritives.

Les substrats selon l'invention sont formés d'un feutre de fibres minérales. On peut utiliser de la laine de roche qui est produite à partir de matériaux tels que roches basaltiques, laitiers de hauts fourneaux, etc.... Cette laine de roche, par suite de sa porosité, peut être utilisée pour former des substrats selon l'invention. Cependant, par suite de son procédé de fabrication, le feutre obtenu comprend un pourcentage assez élevé d'infibrés. Ce sont des particules de diamètre supérieur à celui des fibres proprement dites et qui participent de façon très réduite à la formation du réseau capillaire et par suite, aux propriétés d'hydrorétentivité.

On peut aussi utiliser, pour les substrats de l'invention, de la laine de verre. Les propriétés de cette laine la rendent particulièrement appropriée pour la formation de substrats pour la culture hors-sol. Les procédés de fabrication actuels des fibres de verre, par exemple celui dans lequel les fibres sont formées par passage du matériau fondu dans une filière centrifuge, ont l'avantage de permettre la formation de feutres à structure homogène. Les feutres, obtenus à partir de ces fibres, ne contiennent pas d'infibrés, sont donc plus légers que les feutres de laine de roche et présentent une meilleure hydrorétentivité. Les feutres de fibres de verre ont en outre des avantages non négligeables en ce qu'ils présentent une bonne capacité de compression et de reprise d'épaisseur lorsque la compression a cessé, caractéristiques qui permettent un conditionnement et un stockage améliorés.

Pour améliorer l'aptitude du substrat à accepter l'eau, on peut ajouter un agent mouillant au feutre de fibres minérales, constituant le substrat. Cet agent mouillant peut être introduit au cours de la fabrication du feutre ou bien à un moment ultérieur quelconque. L'addition peut être effectuée par tout procédé approprié, tel que pulvérisation, imbibition.

Les exemples qui vont suivre sont donnés à titre indicatif, pour illustrer l'invention.

Dans ces exemples, à moins que cela soit indiqué précisément, les substrats sont formés de feutre de fibres de verre obtenues par le procédé bien connu utilisant la filière centrifuge. Selon ce procédé, les fibres sont formées par passage de la matière fondue dans les orifices d'une filière centrifuge ; elles sont ensuite étirées par un courant gazeux intense et entrainées par ce dernier jusqu'à un tapis récepteur mobile et perméable au courant gazeux. Lorsque le substrat comprend plusieurs couches, celles-ci sontobtenues par dépôt, sur le tapis récepteur mobile, de fibres provenant de filières centrifuge successives.

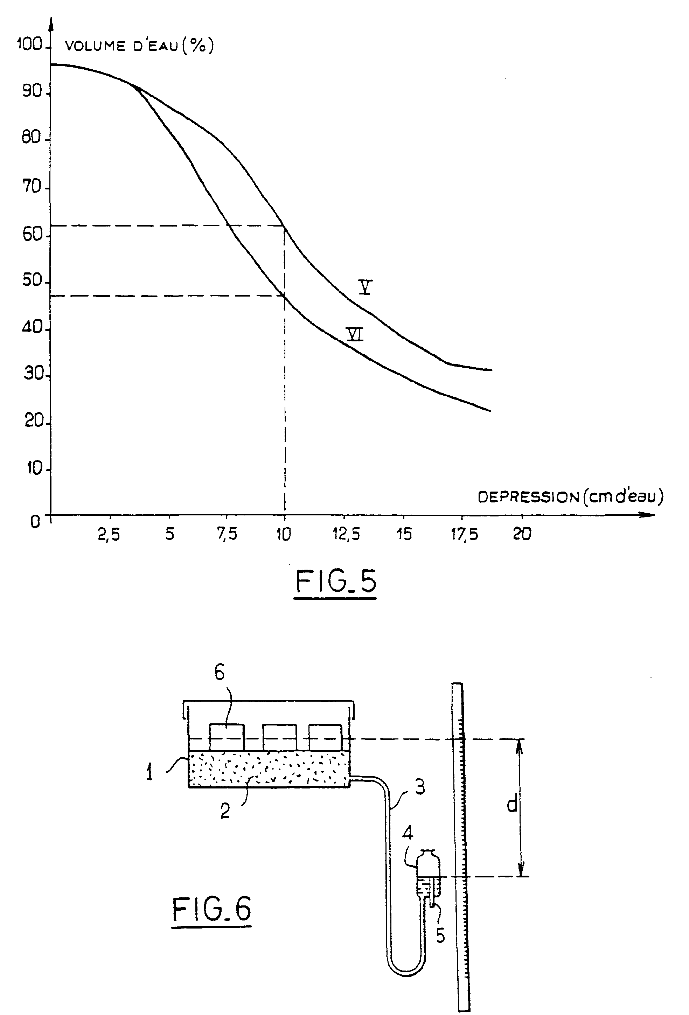

L'hydrorétention des substrats est déterminée par le procédé suivant (voir figure 6) : on utilise un bac 1 contenant une matière poreuse 2, tel que du sable, saturée d'eau. Le fond du bac communique, par une conduite souple 3 avec un vase 4, contenant de l'eau. Le niveau de l'eau est maintenu constant grâce à un système de trop plein 5. La position du vase 4 peut être réglée à volonté sur un support vertical. On règle le "niveau constant" pour que le niveau d'eau dans le bac à sable se trouve à 37,5 mm du niveau supérieur du sable (soit la moitié de la hauteur des échantillons qui est égale à 75 mm).

On découpe, dans un feutre de fibres minérales, des échantillons du 10 cm x 10 cm 7,5 cm. On les pèse. On les immerge dans un bac rempli d'eau pendant 24 h.

On place ensuite ces échantillons (6) sur le sable 2. On abaisse ensuite le niveau constant d'une certaine valeur, pour soumettre le substrat à des forces de succion. On mesure cette dénivellation ou dépression (d) en se référant à la mi-hauteur de l'échantillon. Après chaque dépression, on pèse l'échantillon au bout de 24 heures pour obtenir l'équilibre hydrique, puis on les replace sur le sable et on abaisse à nouveau le niveau constant pour augmenter la dépression d'eau.

On obtient ainsi la masse d'eau retenue par le substrat et par suite le pourcentage volumique de l'eau par rapport au volume total du substrat en fonction des forces de succion exercées.

### EXEMPLE 1

On prépare un substrat I selon l'invention, de densité 25 kg/m³ contenant des fibres de verre dont la finesse, définie par le diamètre des fibres, croit suivant le sens de la gravité.

Le substrat a une épaisseur totale de 75 mm et est formé de 3 couches ayant chacune un grammage de 600 g/m². Ces couches sont réparties dans l'ordre suivant et de haut en bas, c'est-à-dire suivant le sens de la gravité : la première couche comprend des fibres de verre de 4 µm de diamètre moyen, la deuxième couche de fibres de 5,6 µm de diamètre moyen et la dernière couche de fibres de 8 µm de diamètre moyen.

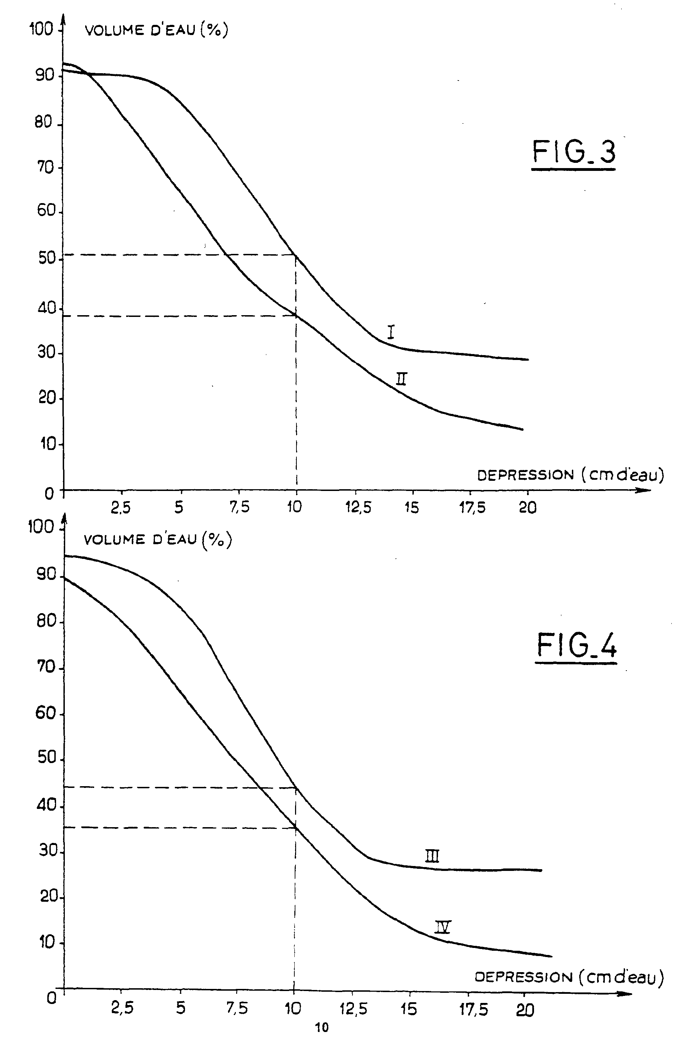

On détermine l'hydrorétention du substrat I en fonction des forces de succion suivant le procédé décrit précédemment. Elle est représentée à la courbe I de la figure 3. On constate que, pour une dépression de 10 cm d'eau, le volume d'eau retenue par le substrat représente un peu plus de 50 % du volume total du substrat.

On prend le même échantillon et on l'utilise en sens inverse, c'est-à-dire que la couche supérieure du substrat 1, qui contient les fibres les plus fines, constitue la couche inférieure du substrat (appelé substrat II).

On obtient ainsi un substrat II dans lequel la finesse des fibres décroit suivant le sens de la gravité.

La courbe II de la figure 3 donne l'hydrorétention du substrat II. On peut voir que, pour une dépression de 10 cm d'eau, le volume d'eau retenue par le substrat est inférieur à 40 %. Ainsi, le substrat (II), dans lequel les fibres les plus fines se situent dans la partie inférieure et les fibres les plus grosses en surface, retient moins d'eau que le substrat (I) de structure identique mais inversée.

### EXEMPLE 2 :

Un substrat III de densité 25 kg/m³, d'épaisseur totale de 75 mm, comprend 3 couches de fibres de verre réparties dans l'ordre suivant, de haut en bas : une première couche de 300 g/m² de grammage contenant des fibres dont le diamètre moyen est de 4 µm ; une deuxième couche de 900 g/m² de grammage comprenant des fibres de 5,6 µm de diamètre moyen et une couche de 600 g/m² de grammage contenant des fibres de 8 µm de diamètre moyen. La courbe d'hydrorétention du substrat III est donnée à la figure 4 (courbe III). On constate que, pour une dépression de 10 cm d'eau, le volume d'eau retenue par le substrat représente 45 % environ du volume du substrat.

Un échantillon du même substrat III, utilisé en sens inverse, la première couche de fibres fines de 4 um de diamètre moyen se trouvant à la base du substrat (substrat IV), présente une hydrorétention (environ 35% d'eau pour une dépression de 10 cm d'eau) qui est inférieure à celle du substrat III de structure identique mais inversée.

### EXEMPLE 3 :

On prépare, comme aux exemples précédents, un substrat V formé d'un feutre de fibres de verre de densité 25 kg/m³. L'épaisseur totale du substrat est de 75 mm. Il comprend 2 couches réparties comme suit, de haut en bas : une couche de 600 g/m² de grammage contenant des fibres de verre dont le diamètre moyen est de 4 µm et une couche de 1200 g/m² de grammage contenant des fibres de verre dont le diamètre moyen est de 5,6 µm.

Les courbes d'hydrorétention du substrat V et du substrat VI, de structure identique mais inversée, sont données à la figure 5. On constate que, pour une dépression de 10 cm d'eau, l'eau retenue par le substrat V représente plus de 60 % du volume du substrat et l'eau retenue par le substrat VI en représente plus de 45 %.

On peut remarquer que, lorsque les couches les plus fines sont dans la partie supérieure du feutre, l'hydro-rétention du substrat est plus élevée.

Après étude des courbes précédentes, on peut dire que, pour obtenir une rétention d'eau plus élevée, il est préférable que le diamètre moyen des fibres augmente suivant le sens de la gravité (courbes I, III et V).

Dans les exemples précédents, on donnait le pourcentage volumique de l'eau retenu dans l'ensemble du substrat.

Dans l'exemple suivant, on détermine le pourcentage volumique d'eau retenue par chaque couche de fibres constituant le substrat pour montrer que l'on peut, selon l'invention, contrôler la teneur en eau dans le substrat et obtenir une hydrorétention constante dans toute son épaisseur, en créant, dans l'épaisseur de ce dernier, un gradient d'hydrorétentivité.

### EXEMPLE 4

### SUBSTRAT A : témoin

On prépare un substrat A de 100 mm d'épaisseur totale en superposant quatre couches de fibres de verre de 25 mm d'épaisseur et de densité voisine. Les 4 couches contiennent des fibres de même diamètre moyen, 8 µm.

On obtient ainsi un substrat de structure analogue aux substrats usuels, c'est-à-dire ne présentant ni un gradient de densité, ni un gradient de finesse des fibres.

On immerge le substrat A dans l'eau, puis on laisse s'écouler l'eau, par drainage naturel, pendant 10 mn.

Les pourcentages volumiques d'eau contenue dans chacune des couches après drainage sont indiqués au tableau suivant.

| Substrat | Couches | Diamètre des fibres | Rétention d'eau (%) |
|---|---|---|---|
| A | 1 | 8 µm | 36,6 |
| | 2 | 8 µm | 77,8 |
| | 3 | 8 µm | 96,8 |
| | 4 | 8 µm | 98,2 |

On note que le diamètre moyen des fibres étant le même dans l'ensemble du substrat, la rétention d'eau est plus forte dans les couches inférieures.

### SUBSTRAT B :

On prépare un substrat B, analogue au substrat A, mais dans lequel la première couche (couche 1) contient des fibres de diamètre moyen 4 µm.

Les pourcentages volumiques d'eau retenue par le substrat B sont indiqués ci-dessous:

| Substrat | Couches | Diamètre des fibres | Rétention d'eau (%) |
|---|---|---|---|
| B | 1 | 4 µm | 99 |
| | 2 | 8 µm | 57 |
| | 3 | 8 µm | 97,6 |
| | 4 | 8 µm | 99,5 |

Les trois dernières couches 2, 3 et 4 de ce substrat B, de densité voisine et contenant des fibres de même diamètre, constitue une partie du substrat ne présentant ni un gradient de densité, ni un gradient de finesse, et qui a donc une structure correspondant aux substrats usuels. Elle en présente aussi les inconvénients en ce que l'eau s'accumule par gravité dans les couches inférieures qui contiennent plus d'eau que les couches supérieures.

La couche (1) contenant des fibres plus fines (4 µm) permet de créer en surface une couche à forte rétention d'eau.

### SUBSTRAT C :

On compare le substrat B à un substrat C de 100 mm d'épaisseur totale obtenu en superposant 4 couches de fibres de verre de 25 mm d'épaisseur, qui se répartissent dans l'ordre suivant, de haut en bas.
La couche (1) comprend des fibres de 4 µm de diamètre moyen ;
La couche (2) contient des fibres de 5,6 µm de diamètre moyen ;
Les couches (3) et (4) contiennent des fibres de 8 µm de diamètre moyen.

Comme pour le substrat B, on évalue les pourcentages volumiques d'eau contenue dans chaque couche du substrat C après un drainage naturel de 10 mn. Les résultats sont indiqués au tableau suivant :

| Substrat | Couches | Diamètre des fibres | Rétention d'eau (%) |
|---|---|---|---|
| C | (1) | 4 µm | 97,7 |
| | (2) | 5,6 µm | 92,4 |
| | (3) | 8 µm | 93,5 |
| | (4) | 8 µm | 97,6 |

On peut constater que le substrat C se différencie du substrat B en ce qu'il comprend, dans la couche (2), des fibres de diamètre inférieur (5,6 µm au lieu de 8 µm dans le substrat B). Dans le substrat C, le diamètre moyen des fibres croit dans le sens de la gravité, conformément à l'invention. On note qu'en utilisant un tel substrat, on obtient une hydrorétention qui est approximativement constante dans toute l'épaisseur du substrat.

## Revendications (Revendications pour l'(les) Etat(s) contractant(s) suivant(s): AT, BE, CH, LI, DE, IT, GB, ES, NL, SE)

1. Substrat pour culture hors-sol formé d'un feutre de fibres minérales, utile pour l'alimentation de plantes en eau ou en solution aqueuse nutritive, **caractérisé en ce qu'**il est formé d'un feutre de fibres minérales de même diamètre moyen mais dont la densité diminue dans le sens de la gravité, sa structure présentant un gradient de densité suivant l'épaisseur du feutre de fibres minérales, de telle sorte que sa structure fibreuse présente un gradient d'hydrorétentivité tel que cette dernière décroisse suivant le sens de la gravité.

2. Substrat pour culture hors-sol formé d'un feutre de fibres minérales, utile pour l'alimentation de plantes en eau ou en solution aqueuse nutritive, **caractérisé en ce qu'**il a une structure présentant soit un gradient de finesse des fibres, soit un gradient de densité, soit la combinaison de ces deux gradients, suivant l'épaisseur du feutre de fibres minérales, de telle sorte que sa structure fibreuse présente un gradient d'hydrorétentivité tel que cette dernière décroisse suivant le sens de la gravité et **en ce que** la densité de la structure fibreuse est de 15 à 60 kg/m³.

3. Substrat pour culture hors-sol formé d'un feutre de fibres minérales, utile pour l'alimentation de plantes en eau ou en solution aqueuse nutritive, **caractérisé en ce qu'**il a une structure présentant un gradient de finesse des fibres suivant l'épaisseur du feutre de fibres minérales, de telle sorte que sa structure fibreuse présente un gradient d'hydrorétentivité tel que cette dernière décroisse suivant le sens de la gravité.

4. Substrat conforme à la revendication 3, **caractérisé en ce qu'**il a une structure présentant un gradient de densité suivant l'épaisseur du feutre de fibres minérales en combinaison avec le gradient de finesse des fibres, de telle sorte que sa structure fibreuse présente un gradient d'hydrorétentivité tel que cette dernière décroisse suivant le sens de la gravité.

5. Substrat présentant un gradient de finesse des fibres suivant l'épaisseur du feutre selon l'une quelconque des revendications 2 à 4, **caractérisé en ce que** le diamètre des fibres croit dans le sens de la gravité.

6. Substrat conforme à la revendication 5, **caractérisé en ce que** le diamètre moyen des fibres est compris entre 2 et 12 µm.

7. Substrat présentant un gradient de densité suivant l'épaisseur du feutre conforme à l'une quelconque des revendications 2 ou 4, **caractérisé en ce que** la densité diminue suivant le sens de la gravité.

8. Substrat conforme à l'une quelconque des revendications 1, 3 ou 4, **caractérisé en ce que** la densité est comprise entre 15 et 60 kg/m³.

9. Substrat conforme à la revendication 6, **caractérisé en ce qu'**il contient, dans sa partie supérieure, des fibres de diamètre moyen compris entre 2 et 5 µm.

10. Substrat conforme à l'une quelconque des revendications 2 ou 8, **caractérisé en ce qu'**il présente, dans sa partie supérieure, une densité comprise entre 30 et 60 kg/m³.

11. Substrat conforme à l'une quelconque des revendications 1 à 10, **caractérisé en ce qu'**il comprend plusieurs couches de fibres.

12. Substrat conforme à l'une quelconque des revendications 1 à 11, **caractérisé en ce qu'**il comprend des fibres de verre.

## Revendications (Revendications pour l'(les) Etat(s) contractant(s) suivant(s): LU)

1. Substrat pour culture hors-sol formé d'un feutre de fibres minérales, utile pour l'alimentation de plantes en eau ou en solution aqueuse nutritive, **caractérisé en ce qu'**il a une structure présentant soit un gradient de finesse des fibres, soit un gradient de densité, soit la combinaison de ces deux gradients, suivant l'épaisseur du feutre de fibres minérales, de telle sorte que sa structure fibreuse présente un gradient d'hydrorétentivité tel que cette dernière décroisse suivant le sens de la gravité.

2. Substrat présentant un gradient de finesse des fibres suivant l'épaisseur du feutre selon la revendication 1, **caractérisé en ce que** le diamètre des fibres croit dans le sens de la gravité.

3. Substrat conforme à la revendication 2, **caractérisé en ce que** le diamètre moyen des fibres est compris entre 2 et 12 µm.

4. Substrat présentant un gradient de densité suivant l'épaisseur du feutre conforme à la revendication 1, **caractérisé en ce que** la densité diminue suivant le sens de la gravité.

5. Substrat conforme à la revendication 4, **caractérisé en ce que** la densité est comprise entre 15 et 60 kg/m³.

6. Substrat conforme à la revendication 3, **caractérisé en ce qu'**il contient, dans sa partie supérieure, des fibres de diamètre moyen compris entre 2 et 5 µm.

7. Substrat conforme à la revendication 5, **caractérisé en ce qu'**il présente, dans sa partie supérieure, une densité comprise entre 30 et 60 kg/m³.

8. Substrat conforme à l'une quelconque des revendications 1 à 7, **caractérisé en ce qu'**il comprend plusieurs couches de fibres.

9. Substrat conforme à l'une quelconque des revendications 1 à 8, **caractérisé en ce qu'**il comprend des fibres de verre.

## Patentansprüche (Patentansprüche für folgende(n) Vertragsstaat(en): AT, BE, CH, LI, DE, IT, GB, ES, NL, SE)

1. Substrat für erdelose Kulturverfahren, welches einen Mineralwollefilz aufweist und zur Versorgung von Pflanzen mit Wasser oder wässriger Nährlösung dient, **dadurch gekennzeichnet, daß** es einen Filz aus Mineralfasern mit einem gleichen mittleren Durchmesser aufweist, dessen Dichte jedoch über die Dicke des Mineralwollefilzes abnimmt, wobei sein Aufbau über die Dicke des Mineralwollefilzes einen Gradienten der Dichte derart aufweist, daß seine Faserstruktur einen Wasserrückhaltungs-Gradienten in der Weise aufweist, daß das Wasserrückhaltevermögen in Richtung der Schwerkrafteinwirkung abnimmt.

2. Substrat für erdelose Kulturverfahren, welches einen Mineralwollefilz aufweist und zur Versorgung von Pflanzen mit Wasser oder wässriger Nährlösung dient, **dadurch gekennzeichnet, daß** sein Aufbau über die Dicke des Mineralwollefilzes einen Gradienten der Faserfeinheit, oder einen Gradienten der Dichte, oder eine Kombination dieser beiden Gradienten derart aufweist, daß seine Faserstruktur einen Wasserrückhaltungs-Gradienten in der Weise aufweist, **daß** das Wasserrückhaltevermögen in Richtung der Schwerkrafteinwirkung abnimmt, sowie dadurch, daß die Dichte der Faserstruktur von 15 bis 60 kg/m³ beträgt.

3. Substrat für erdelose Kulturverfahren, welches einen Mineralwollefilz aufweist und zur Versorgung von Pflanzen mit Wasser oder wässriger Nährlösung dient, **dadurch gekennzeichnet, daß** sein Aufbau über die Dicke des Mineralwollefilzes einen Gradienten der Faserfeinheit derart aufweist, daß seine Faserstruktur einen Wasserrückhaltungs-Gradienten in der Weise aufweist, daß das Wasserrückhaltevermögen in Richtung der Schwerkrafteinwirkung abnimmt.

4. Substrat nach Anspruch 3, **dadurch gekennzeichnet, daß** sein Aufbau einen einen Gradienten der Dichte in Kombination mit dem Gradienten der Faserfeinheit derart aufweist, daß seine Faserstruktur einen Wasserrückhaltungs-Gradienten in der Weise aufweist, daß das Wasserrückhaltevermögen in Richtung der Schwerkrafteinwirkung abnimmt.

5. Substrat mit einem Gradienten der Faserfeinheit über die Dicke des Filzes nach einem der Ansprüche 2 bis 4, **dadurch gekennzeichnet, daß** der Durchmesser der Fasern in Richtung der Schwerkrafteinwirkung zunimmt.

6. Substrat nach Anspruch 5, **dadurch gekennzeichnet, daß** der mittlere Durchmesser der Fasern zwischen 2 und 12 µm beträgt.

7. Substrat mit einem Gradienten der Dichte über die Dicke des Filzes nach einem der Ansprüche 2 oder 4, **dadurch gekennzeichnet, daß** die Dichte in Richtung der Schwerkrafteinwirkung abnimmt.

8. Substrat nach einem der Ansprüche 1, 3 oder 4, **dadurch gekennzeichnet, daß** die Dichte zwischen 15 und 60 kg/m³ liegt.

9. Substrat nach Anspruch 6, **dadurch gekennzeichnet, daß** es in seinem oberen Teil Fasern mit einem mittleren Durchmesser zwischen 2 um und 5 µm enthält.

10. Substrat nach einem der Ansprüche 2 oder 8, **dadurch gekennzeichnet, daß** es in seinem oberen Teil eine Dichte zwischen 30 und 60 kg/m³ aufweist.

11. Substrat nach einem der Ansprüche 1 bis 10, **dadurch gekennzeichnet, daß** es eine Mehrzahl von Faserschichten aufweist.

12. Substrat nach einem der Ansprüche 1 bis 11, **dadurch gekennzeichnet, daß** es Glasfasern aufweist.

## Patentansprüche (Patentansprüche für folgende(n) Vertragsstaat(en): LU)

1. Substrat für erdelose Kulturverfahren, welches einen Mineralwollefilz aufweist und zur Versorgung von Pflanzen mit Wasser oder wässriger Nährlösung dient, **dadurch gekennzeichnet, daß** sein Aufbau über die Dicke des Mineralwollefilzes einen Gradienten der Faserfeinheit, oder einen Gradienten der Dichte, oder eine Kombination dieser beiden Gradienten derart aufweist, daß seine Faserstruktur einen Wasserrückhaltungs-Gradienten in der Weise aufweist, daß das Wasserrückhaltevermögen in Richtung der Schwerkrafteinwirkung abnimmt.

2. Substrat mit einem Gradienten der Faserfeinheit über die Dicke des Filzes gemäß Anspruch 1, **dadurch gekennzeichnet, daß** der Durchmesser der Fasern in Richtung der Schwerkrafteinwirkung zunimmt.

3. Substrat nach Anspruch 2, **dadurch gekennzeichnet, daß** der mittlere Durchmesser der Fasern zwischen 2 und 12 *m liegt.

4. Substrat mit einem Gradienten der Dichte über die Dicke des Filzes nach Anspruch 1, **dadurch gekennzeichnet, daß** die Dichte in Richtung der Schwerkrafteinwirkung abnimmt.

5. Substrat nach Anspruch 4, **dadurch gekennzeichnet, daß** die Dichte zwischen 15 und 60 kg/m3 liegt.

6. Substrat nach Anspruch 3, **dadurch gekennzeichnet, daß** es in seinem oberen Teil Fasern mit einem mittleren Durchmesser zwischen 2 *m und 5 *m enthält.

7. Substrat nach Anspruch 5, **dadurch gekennzeichnet, daß** es in seinem oberen Teil eine Dichte zwischen 30 und 60 kg/m3 aufweist.

8. Substrat nach einem der Ansprüche 1 bis 7, **dadurch gekennzeichnet, daß** es eine Mehrzahl von Faserschichten aufweist.

9. Substrat nach einem der Ansprüche 1 bis 8, **dadurch gekennzeichnet, daß** es Glasfasern aufweist.

## Claims (Claims for the following Contracting State(s): AT BE CH LI DE IT GB ES NL SE)

1. A substrate for soil-free culture which is formed by a felt of mineral fibres and which is suitable for supplying plants with water or with an aqueous nutrient solution, **characterised in that** it is formed by a felt of mineral fibres having the same mean diameter but whose density decreases in the direction of gravity, the structure thereof having a density gradient in accordance with the thickness of the felt of mineral fibres, so that the fibrous structure thereof has a hydroretentivity gradient such that the hydroretentivity decreases in the direction of gravity.

2. A substrate for soil-free culture which is formed by a felt of mineral fibres and which is suitable for supplying plants with water or with an aqueous nutrient solution, **characterised in that** it has a structure having a gradient of fineness of the fibres or a gradient of density, or a combination of the two gradients, in accordance with the thickness of the felt of mineral fibres, so that the fibrous structure thereof has a gradient of hydroretentivity such that the hydroretentivity decreases in the direction of gravity, and **in that** the density of the fibrous structure is from 15 to 60 kg/m³.

3. A substrate for soil-free culture which is formed by a felt of mineral fibres and which is suitable for supplying plants with water or with an aqueous nutrient solution, **characterised in that** it has a structure having a gradient of fineness of the fibres in accordance with the thickness of the felt of mineral fibres, so that the fibrous structure thereof has a gradient of hydroretentivity such that the hydroretentivity decreases in the direction of gravity.

4. A substrate according to claim 3, **characterised in that** it has a structure having a density gradient in accordance with the thickness of the felt of mineral fibres in combination with the gradient of fineness of the fibres, so that the fibrous structure thereof has a gradient of hydroretentivity such that the hydroretentivity decreases in the direction of gravity.

5. A substrate having a gradient of fineness of the fibres in accordance with the thickness of the felt according to any one of claims 2 to 4, **characterised in that** the diameter of the fibres increases in the direction of gravity.

6. A substrate according to claim 5, **characterised in that** the mean diameter of the fibres is between 2 and 12 µm.

7. A substrate having a density gradient in accordance with the thickness of the felt according to either claim 2 or 4, **characterised in that** the density decreases in accordance with the direction of gravity.

8. A substrate according to any one of claims 1, 3 or 4, **characterised in that** the density is between 15 and 60 kg/m³.

9. A substrate according to claim 6, **characterised in that** it contains, in the upper portion thereof, fibres having a mean diameter of between 2 and 5 µm.

10. A substrate according to either claim 2 or 8, **characterised in that** it has, in the upper portion thereof, a density of between 30 and 60 kg/m³.

11. A substrate according to any one of claims 1 to 10, **characterised in that** it comprises a plurality of layers of fibres.

12. A substrate according to any one of claims 1 to 11, **characterised in that** it comprises glass fibres.

## Claims (Claims for the following Contracting State(s): LU)

1. A substrate for soil-free culture which is formed by a felt of mineral fibres and which is suitable for supplying plants with water or with an aqueous nutrient solution, **characterised in that** it has a structure having a gradient of fineness of the fibres or a gradient of density, or a combination of the two gradients, in accordance with the thickness of the felt of mineral fibres, so that the fibrous structure thereof has a gradient of hydroretentivity such that the hydroretentivity decreases in the direction of gravity.

2. A substrate having a gradient of fineness of the fibres in accordance with the thickness of the felt according to claim 1, **characterised in that** the diameter of the fibres increases in the direction of gravity.

3. A substrate according to claim 2, **characterised in that** the mean diameter of the fibres is between 2 and 12 µm.

4. A substrate having a density gradient in accordance with the thickness of the felt according to claim 1, **characterised in that** the density decreases in the direction of gravity.

5. A substrate according to claim 4, **characterised in that** the density is between 15 and 60 kg/m³.

6. A substrate according to claim 3, **characterised in that** it contains, in the upper portion thereof, fibres having a mean diameter of between 2 and 5 µm.

7. A substrate according to claim 5, **characterised in that** it has, in the upper portion thereof, a density of between 30 and 60 kg/m³.

8. A substrate according to any one of claims 1 to 7, **characterised in that** it comprises a plurality of layers of fibres.

9. A substrate according to any one of claims 1 to 8, **characterised in that** it comprises glass fibres.
